Europäisches Patentamt

European Patent Office

Office européen des brevets

(19)

(11) **EP 0 875 810 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(51) Int Cl.[7]: **G05B 19/418**, G05B 19/406, B25J 9/16

(21) Anmeldenummer: **98107462.8**

(22) Anmeldetag: **23.04.1998**

(54) **Verfahren und Vorrichtung zum Überwachen einer Anlage mit mehreren Funktionseinheiten**

Method and device for monitoring an installation with several function units

Méthode et dispositif de surveillance d'une installation comprenant plusieurs unités fonctionnelles

(84) Benannte Vertragsstaaten:
**DE FR GB IT SE**
Benannte Erstreckungsstaaten:
**SI**

(30) Priorität: **01.05.1997 DE 19718284**

(43) Veröffentlichungstag der Anmeldung:
**04.11.1998 Patentblatt 1998/45**

(73) Patentinhaber:
• **KUKA Roboter GmbH**
**86165 Augsburg (DE)**
• **IGM - ROBOTERSYSTEME Aktiengesellschaft**
**A-2355 Wiener Neudorf, Niederösterreich (AT)**

(72) Erfinder:
• **Schwarzinger, Wolfgang, Dr.**
**1030 Wien (AT)**
• **Roth, Stefan**
**86485 Eisenbrechtshofen (DE)**

(74) Vertreter:
**Lempert, Jost, Dipl.-Phys. Dr. rer.nat. et al**
**Patentanwälte,**
**Dipl.-Ing. Heiner Lichti,**
**Dipl.-Phys. Dr. rer. nat. Jost Lempert,**
**Dipl.-Ing. Hartmut Lasch,**
**Postfach 41 07 60**
**76207 Karlsruhe (DE)**

(56) Entgegenhaltungen:
EP-A- 0 400 624        EP-A- 0 541 483
WO-A-86/04432        WO-A-95/16943
WO-A-95/17706        GB-A- 2 283 836
US-A- 5 291 416

## Beschreibung

Die Erfindung betrifft ein Verfahren nach dem Oberbegriff des Anspruchs 1 und eine Vorrichtung nach dem Oberbegriff des Anspruch 7 zum Überwachen einer Anlage mit mehreren Funktionseinheiten, wie solche einer Fertigungsanlage.

Bei einer Anlage, wie einer Fertigungsanlage, von der die Erfindung ausgeht, kann es sich um eine oder mehrere einander zugeordnete Maschinen handeln, wie beispielsweise Roboter. Eine Maschine bzw. ein Roboter besteht aus mehreren unterschiedlichen Funktionseinheiten, wie dem Leistungsteil (Power Modul), einer Steuereinheit, einer Bedienungseinheit u.a.. In einer Anlage, von der ausgegangen wird, können mehrere solche Maschinen mit den genannten Funktionseinheiten zusammenarbeiten und miteinander verknüpft sein. Weiterhin kann Peripherie vorhanden sein, wie Schienen, auf denen die Maschinen, wie Roboter, verfahren werden oder ein Portal, das die Maschinen oder Roboter entlang eines zu bearbeitenden "Werkstücks" wie eines Schiffes, verfährt.

Aus der WO 95/16943 ist ein Verfahren zur Überwachung sicherheitsrelevanter Funktionen eines Geräts bekannt, bei dem zwei Mikrocomputersysteme über einen Datenbus miteinander verbunden sind. Ein Prozessor erfüllt eine Master-Funktion, während der andere als Slave arbeitet. Das damit verbundene zeitversetzte und aufgabengetrennte Arbeiten ermöglicht bei einem Vergleich der Prozessoren insbesondere die Unterscheidung von sporadischen Störeinflüssen gegenüber echten betriebsrelevanten Fehlern.

Die WO 95/17706 zeigt ein Verfahren bei dem zwei oder mehr dedizierte, d.h. einer Funktionseinheit zugeordneten Computer simultan den Prozess steuern, und Echtzeitdaten, die den tatsächlichen Zustand ausgewählter Variablen präsentieren, gleichzeitig mit einer alphanumerischen Darstellung eines Quellcodeaussage auf der Basis dieser Variablen einer Anzeige dargestellt werden.

Die EP 400 624 zeigt eine verteilte Steuereinrichtung, bei der Motorsteuereinheiten in einzelnen Motoren zugeordnet sind und weiterhin eine optische Überwachung sowie eine Anzeige vorhanden sind.

Bisher werden bei Steuereinrichtungen parallele Not-Aus-Verdrahtungen vorgenommen, die in Relaistechnik verwirklicht werden. Probleme ergeben sich dabei mit der Sicherheit bei Programmierhandgeräten (Bedienungseinheiten), deren flexible Anschlusskabel vielen Einwirkungen ausgesetzt sind, so dass ein Kurzausschluss zwischen Not-Aus-Leistungen nicht sicher ausgeschlossen werden kann. Die notwendige Zweikanaligkeit macht die Kabel zudem steif, dick und schwer. Parallel verdrahtete Sicherheitskreise sind applikationsspezifisch ausgelegt und bieten keine Flexibilität. Funktionelle Abweichungen sind nur durch eine Umkonstruktion möglich. Not-Aus-Schleifen und Bedienerschutz-Schleifen sind zwar erweiterbar, sie bieten aber nicht die Möglichkeit einer Diagnose, wenn ein Signalgeber im Sicherheitskreis einer Maschinensteuerung geöffnet ist. Darüber hinaus sind derartige Sicherheitseinrichtungen unübersichtlich und schwierig zu warten, wobei gerade die große Zahl der beteiligten Kontakte der Sicherheitslogik wiederum einen negativen Einfluss auf die Betriebssicherheit hat.

Der Erfindung liegt die Aufgabe zugrunde, ein Verfahren und eine Vorrichtung zu schaffen, mittels derer in einfacher, übersichtlicher Weise eine inhärente Erhöhung der Sicherheit bei einer komplexen Anlagen, wie sie oben skizziert wurde, erreicht werden kann.

Erfindungsgemäß wird die genannte Aufgabe durch ein Verfahren der eingangs genannten Art mit den Merkmalen des Anspruchs 1 sowie einer Vorrichtung der eingangs genannten Art mit den Merkmalen des Anspruchs 7 gelöst.

Die Erfindung sieht eine verteilte Sicherheitslogik vor, bei der jede Sicherheitseinrichtung sämtliche erforderlichen Sicherheitsfunktionen aufweist. Hierdurch ist eine hochauflösende Diagnose möglich. Die Sicherheitseinrichtungen stehen miteinander in Verbindung bzw. kommunizieren miteinander, so dass sie sich auch gegenseitig überwachen können und eine Sicherheitseinrichtung den Ausfall einer anderen erkennt und damit ein sicherheitsrelevantes Signal zur Betätigung eines Stellgliedes ausgeben kann.

In einer ersten bevorzugten Ausführung ist vorgesehen, dass die Sicherheitseinrichtungen einen Controller-Kern und eine Schnittstellenbeschaltung aufweisen. Hierdurch können die Sicherheitseinrichtungen sehr einfach und übersichtlich aufgebaut sein.

In bevorzugter Ausgestaltung ist vorgesehen, dass die Sicherheitseinrichtungen seriell miteinander kommunizieren bzw. dass die Sicherheitseinrichtungen seriell miteinander verbunden sind. Durch die serielle Verbindung wird eine parallele Verdrahtung überflüssig. Notwendige Kabelquerschnitte können reduziert werden, was insbesondere für portable Geräte, wie Bedien- oder Programmierhandgeräte, äußerst vorteilhaft ist.

In weiterer bevorzugter Ausgestaltung ist vorgesehen, dass die Sicherheitseinrichtungen mittels eines Ringprotokolls miteinander kommunizieren bzw. dass die Sicherheitseinrichtungen in einem Ring miteinander verbunden sind. Damit ist die gesamte Sicherheitsvorrichtung in einfacher Weise beliebig erweiterbar. Wenn beispielsweise die Anlage weitere Funktionseinheiten erhält, so können die zugehörigen Sicherheitseinrichtungen ohne weiteres in einfacher Weise integriert werden. Es wird hierdurch eine einfache und übersichtliche Anpassbarkeit an verschiedene Anlagen gewährleistet. Die Adressierung kann dabei physikalisch durch Platzierung im Bus erfolgen. Eine sichere Reaktion ist auch bei Erweiterung des Ringprotokolls sofort erreichbar.

Es ist vorgesehen, dass jede Sicherheitseinrichtung mindestens zwei Mikroprozessoren aufweist. Weitere bevorzugte Ausgestaltungen sehen vor, dass jede Sicherheitseinrichtung Diagnoseeingänge aufweist, wobei insbesondere die Diagnoseeingänge mit Prüf-Schaltzyklen der sicherheitsrelevanten Eingänge synchronisiert sind bzw. die Sicherheitseinrichtungen laufend eine Diagnose der ihnen zugeordneten Funktionseinheiten und damit der Anlage durchführen. Hierdurch können Signalgeber, die ein sicherheitsrelevantes Signal abgegeben haben, lokalisiert werden. Darüber hinaus kann eine permanente Überwachung und Diagnose der gesamten Anlage vorgenommen werden.

In weiterer bevorzugter Ausgestaltung ist vorgesehen, dass in den Sicherheitseinrichtungen enthaltene Mikroprozessoren zyklisch ihr Prozessorbild und das daraus kalkulierte Ergebnis und/oder den Inhalt von Speichern überprüfen, wobei insbesondere der korrekte Anschluß und die Funktion von Signaleingängen und Signalgebern überprüft wird. Aufgrund der redundanten Ausgestaltung der Sicherheitseinrichtungen in der oben skizzierten Weise können die Mikroprozessoren sich gegenseitig und die umgebende Hardware zyklisch abprüfen, wobei gleichzeitig das ablaufende Programm auf Konsistenz geprüft werden kann. Der Inhaltsvergleich der Prozessoren erfolgt dabei bei einem Ringprotokoll über den gesamten Ring.

Weitere Ausgestaltungen der erfindungsgemäßen Vorrichtung sehen vor, daß jede Sicherheitseinrichtung mindestens einen sicherheitsrelevanten Ausgang aufweist und/oder daß jede Sicherheitseinrichtung mehrere sicherheitsrelevante Eingänge aufweist.

Sowohl die gesamte Sicherheitsstruktur wird einfach und besonders preiswert, wenn in Weiterbildung vorgesehen ist, daß die Sicherheitseinrichtungen identisch zueinander ausgebildet sind, wobei vorzugsweise auch die in die identischen Sicherheitseinrichtungen integrierte Grundsoftware identisch ist und Anpassungen lediglich über Softbausteine oder -schalter erfolgen.

Das erfindungsgemäße Verfahren und die erfindungsgemäße Lösung weisen wesentliche Vorteile auf. Die Ringstruktur der gesamten überwachungsvorrichtung ist erst geschlossen, wenn sich alle Funktionseinheiten und ihnen zugeordneten einzelnen Sicherheitseinrichtungen in Betrieb befinden. Die Kommunikation wird unterbrochen, wenn eine Sicherheitseinrichtung eine Fehlfunktion zeigt; bei einer solchen andauernden Störung erfolgt eine Abschaltung und das Gesamtsystem tritt in einen sicheren Zustand.

Weitere Vorteile bestehen in der durch die Erfindung erreichten dezentralen Struktur, die, wie gesagt, flexibel erweiterbar ist und dennoch eine zuverlässige Betriebssicherheit bei geringem Platzbedarf und geringen Kosten erreicht. Durch die erfindungsgemäße Lösung wird der Verdrahtungsaufwand minimiert, Diagnosemöglichkeiten werden verbessert. Die Sicherheitseinrichtungen gemäß der Erfindung sind leicht in vorhandene Geräte zu integrieren.

Weitere Merkmale der Erfindung ergeben sich aus den Ansprüchen und aus der nachfolgenden Beschreibung, in der eine bevorzugte Ausführungsform der Erfindung unter Bezugnahme auf die Zeichnung im einzelnen erläutert ist. Dabei zeigt:

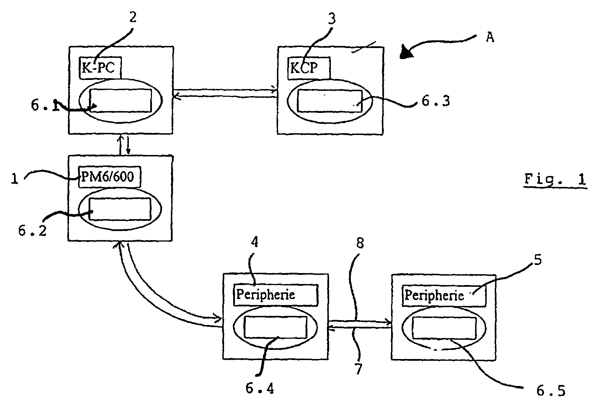

Fig. 1   einen schematischen Aufbau einer erfindungsgemäßen Sicherheits-Vorrichtung an einer zu überwachenden Anlage;

Fig. 2   eine schematische Darstellung einer Sicherheitseinrichtung der erfindungsgemäßen Vorrichtung; und

Fig. 3   ein Diagramm der durch die Erfindung gewährleisteten Betriebszustände der erfindungsgemäßen Vorrichtung.

Eine erfindungsgemäße Vorrichtung dient zur Überwachung einer Anlage A, wie einer Fertigungsanlage; eine solche weist beispielsweise eine Leistungseinheit 1 auf, die die Leistungselektronik und die mechanischen Elemente einer Maschine oder eines Roboters beinhalten. Der Leistungseinheit 1 ist eine Steuereinheit zugeordnet, die die Signalelektronik zur Steuerung der Leistungseinheit 1 enthält und als reine Hardwareschaltung oder in gewünschter Abstufung mit Softwareelementen, bis hin zu einer reinen Computersteuerung, ausgebildet sein kann. Bei einem Roboter sind heute Leistungseinheit 1 und Steuereinheit 2 in der Regel körperlich und räumlich getrennt ausgelegt. Eine Anlage, von der die Erfindung ausgeht, kann weiterhin eine Bedieneinheit 3 aufweisen, die beispielsweise ein Programmierhandgerät sein kann, das im konkreten Fall zum Programmieren eines Roboters, wie der Steuereinheit 2, dienen kann und in einem solchen Fall ebenfalls räumlich und körperlich getrennt von diesem ausgebildet ist.

Weiterhin kann eine derartige Anlage Peripherien 4, 5 aufweisen, wie beispielsweise eine Verfahreinrichtung für die Leistungseinheit (Power Modul) 1 oder aber beispielsweise im Schiffsbau ein Portal, auf dem mehrere Leistungseinheiten 1 angeordnet sind.

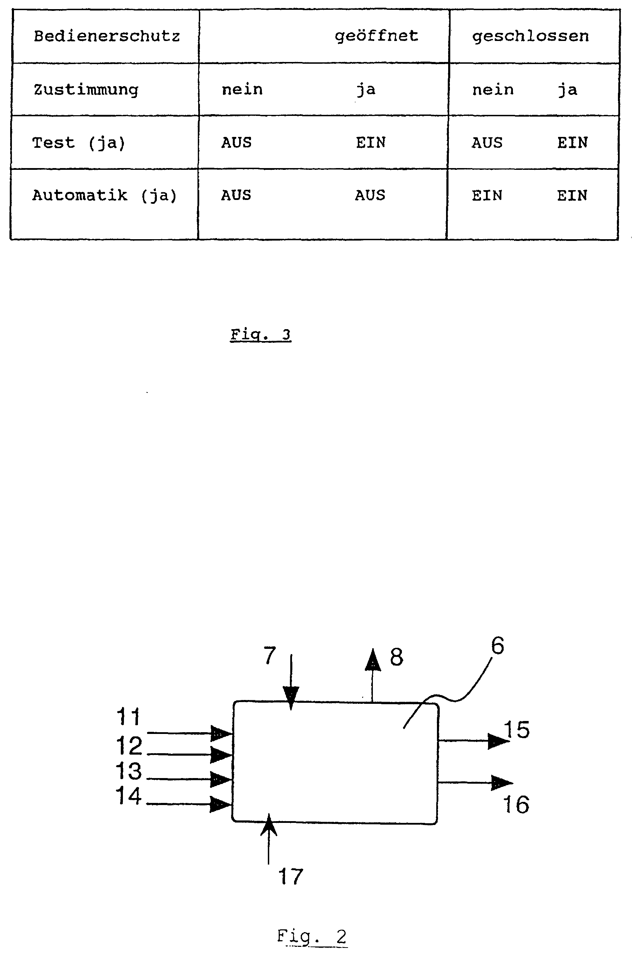

Die Erfindung sieht nun vor, daß jeder der Funktionseinheiten 1 bis 5 eine separate Sicherheitseinrichtung 6.1-6.5 zugeordnet ist. Die Sicherheitseinrichtungen 6.1-6.5 sind vorteilhafterweise identisch ausgebildet und daher in der Fig. 2 lediglich mit dem Bezugszeichen 6 versehen. Eine Sicherheitseinrichtung 6 weist (mindestens) zwei Microcontroller auf. Diese haben ausreichend integrierte RAMs oder ROMs sowie mindestens einen seriellen Anschluß(-Punkt). So kann die Zweikanaligkeit der Sicherheitskreise bis in die Auswertung hinein aufrecht erhalten werden. Die zwei Kanäle des redundanten Systems werden ständig verglichen. Je nach Verwendung ist eine unterschiedliche Schnittstellenbeschaltung vorgesehen. Die Sicherheitseinrichtungen 6.1-6.5 stehen über ankommende und weiterleitende Schnittstellen bzw. Leitungen 7, 8 miteinander in Verbindung. Die Verbindung ist vorzugsweise weiterhin in einer Ringstruktur mit Hin- und Rückleitungen 7, 8 ausgebildet.

Eine erfindungsgemäße Sicherheitseinrichtung 6 weist neben den seriellen Anschlüssen oder Leitungen 7, 8 zur Verbindung mit den anderen Sicherheitseinrichtungen sicherheitsrelevante Eingänge 10-14 auf, die mit der jeweiligen Funktionseinheit und einzelnen Bedienungselementen derselben verbunden sind und zum Einlesen sicherheitsrelevanter Signale dienen. Sicherheitsrelevante Eingänge leiten entweder einen Stop unbedingt ein oder sind Bedingung für einen solchen Stop. Die Eingänge 11-14 sind doppelt ausgeführt, so daß jeder Mikrocontroller über einen unabhängigen Eingang mit identischer Funktion verfügt. Weiter können Eingänge ohne Sicherheitsfunktion vorgesehen sein. Diese werden auch als Diagnoseeingänge bezeichnet und haben auf beiden Controllern unterschiedliche Bedeutung. Alle sicherheitsrelevanten Eingänge 11-14 werden durch beide Mikrocontroller parallel ausgewertet. So kann ein Eingang mit einer Zustimmungstaste, ein anderer mit einer Not-Aus-Taste und ein weiterer mit einer Wahltaste für Test- oder Automatikbetrieb verbunden sein. Darüber hinaus ist ein Eingang zum Anschluß weiterer Bedienerschutz-Einrichtungen vorgesehen. Nicht sämtliche Eingänge müssen in jeder Funktionseinheit belegt sein. So werden die vorstehend erstgenannten Eingänge insbesondere bei der Bedieneinheit belegt sein, während der letztgenannte Eingang (Bedienerschutz) bei der Leistungseinheit bzw. auch einzelnen Peripherieeinheiten belegt ist.

Im einzelnen gilt:

**Lokaler Not-Aus = LNA**

Dies ist der Eingang für den lokalen Not-Aus, der **durch** Betätigen des Roboters NOT-AUS am KCP oder durch eine andere Not-Aus-Bedingung ausgelöst wird. Er führt unter allen Umständen zum Stillsetzen und Energiefreischalten des Roboters sowie der gesamten Anlage, in die der Roboter integriert ist.

**Externe Not-Aus-Anforderung = eNAA**

Dieser Eingang führt unter allen Umständen zum Abschalten des Roboters. Die Not-Aus-Anforderung wird in diesem Fall nicht an die Anlage weitergegeben, da dies zum Verriegeln derselben führen würde.

**Bedienerschutz = BS**

Der Bedienerschutz-Eingang - Verriegelung (für techn. Schutzmaßnahmen) - setzt nur die Sicherheitszelle selbst still. Unter Sicherheitszelle wird hier der Bereich verstanden, der von einer Kinematik gefahrbringend durchfahren werden kann. Bei einer Roboterzelle ist dies z.B. der durch Schutzäune begrenzte Arbeitsbereich des Roboters selbst sowie der Zusatzachsen, die gefährdende Bewegungen ausführen können.

Der Bedienerschutz ist aktiv, wenn die Steuerung in der Betriebsart Automatik arbeitet. Das anstehende Bedienerschutzsignal ist gleichbedeutend mit dem geschlossenen Schutzzaun der Sicherheitszelle.

**1. Qualifizierter Eingang 1 (Test/Auto) = QE1**

Der Eingang 13 für Test/Automatik ist ein qualifizierendes Signal. In der Betriebsart Test ist der Bedienerschutz abgeschaltet und dafür die Zustimmungstasten aktiv. In der Betriebsart Automatik ist der Bedienerschutz aktiv, die Zustimmtasten werden dabei nicht abgefragt. Die Sicherheitszelle kann sich entweder in der Test- oder in der Automatik-Betriebsart befinden. Beide Betriebsarten gleichzeitig sind genauso wenig möglich wie keine Betriebsart. Das Ruhestromprinzip ist hier nur schwer einzuhalten, weil beide Einstellungen aktive Einstellungen sind. Es ist deshalb sinnvoll, gegenparallele Pegel zu verwenden. Es ergibt sich, daß das Signal bei den μControllern einmal als **Automatik** und einmal als **/Automatik** eingelesen wird. Im folgenden wird anstelle der Bezeichnung **/Automatik** die Bezeichnung **Test** verwendet.

**2. Qualifizierender Eingang 2 = QE2**

Für den Eingang 14 gilt die gleiche Maßgabe wie für Eingang 1. Dieser Eingang wird für Steuerungen benötigt, die eine Überbrückung des Bedienerschutzes in der Betriebsart Test benötigen. Bei Überbrückung der Schutzeinrichtung in der Betriebsart Automatik wird wie bei einer Verletzung des Bedienerschutzes die Zelle stillgesetzt.

Es sind weiterhin Ausgänge 15, 16 vorgesehen, die, soweit belegt, sicherheitsrelevante Stellglieder ansteuern und so zur Stillsetzung der Anlage bzw. zum Verfahren derselben in einen sicheren Zustand dienen. Informelle Eingänge 17 sind einkanalig ausgeführt. Das gesamte Sicherheitsnetz soll auch mit externer Spannung zu versorgen sein. Daraus ergibt sich, daß jede Sicherheitseinrichtung 6 eine Spannungsversorgung benötigt. Zu dieem Zweck wird mit der Kommunikationsleitung eine Spannungsversorgung verlegt. Die Nennspannung dieser Spannungsversorgung beträgt 24V. Jeder Kern verfügt über eine eigene Erzeugung der Logikspannung.

Auch hier gilt im einzelnen:

**Sicherheitsrelevante Ausgänge:**

Sicherheitsrelevante Ausgänge sind solche, deren ordnungsgemäße Funktion zum Abschalten der Anlagenenergie zwingend erforderlich ist.

**Antriebe Ein = AE**

Zu den sicherheitsrelevanten Ausgängen zählt die Ansteuerung für den Netzschutz der Antriebe durch das *Antriebe Ein* Signal. Dieser Ausgang ist an jeder Sicherheitseinrichtung vorhanden und ist sicher.

**Not-Aus = NA**

Der Not-Aus-Ausgang hat die Aufgabe, eine lokale Notaus-Anforderung in die Notausschleife einer kompletten Anlage einzuschleifen. Um potentialfreie Kontakte zu erhalten, wird der Knoten mit einer sicheren Relaiskombination ausgestattet.

**Bediener-Schutz = BS**

Unter Bedienerschutz versteht man Einrichtungen zum Schutz des Bedieners. Dazu zählen Schutzzäune, deren Überwachungen und abhängig von der Betriebsart auch der Zustimmungsschalter. Im Knoten werden sämtliche Ausgänge solcher Einrichtungen zusammengefaßt. Der Bedienerschutz-Ausgang hat die Aufgabe, eine Verletzung des Bediener-Schutzes auch für beteiligte Anlagenteile wirksam zu machen. Um potentialfreie Kontakte zu erhalten, kann an den Knoten eine sichere Relaiskombination angeschlossen werden.

Weiter sind informelle oder Steuereingänge und informelle Ausgänge vorgesehen:

**Informelle Eingänge**

Informelle oder Steuereingänge 17 sind diejenigen, die zum ordnungsgemäßen Betrieb des Roboters notwendig sind. Diese Eingänge sind nicht sicherheitsrelevant und können frei verwendet werden. Sie stellen lediglich Informationen für Diagnosezwecke zur Verfügung. Die Eingänge sind synchronisiert mit den Prüf-Schaltzyklen der sicherheitsrelevanten Signale. So können auch verkettete Not-Aus-Taster zwischen den Kontakten eingelesen werden.

**Antriebe Aktivieren = AA**

Das Signal "Antriebe Aktivieren" ist ein Impuls, der die Antriebe einschalten soll, solange keine Sicherheitsanforderung dagegen spricht. Dieses Signal darf nicht dauernd aktiv gehalten werden.

**Antriebe Freigabe = AF**

Das "Antriebe Freigabe"-Signal hat die Aufgabe, die Antriebe durch Wegnahme abzuschalten bzw. ein Einschalten zu verhindern.

**Notaus Info = NAi / Bedienerschutz Info = Bsi**

Eine lokale Notaus- oder Bedienerschutz-Schleife kann mit diesen Eingängen zwischen den Kontakten abgegriffen werden, um bei einer Unterbrechung Informationen über den Ort der Sicherheitsanforderung zu erhalten.

**Informelle Ausgänge:**

Informelle Ausgänge sind diejenigen, die ausgegeben werden, um den Status des Sicherheitsnetzwerks darzustellen. Informelle Ausgänge können zu einer Registerschnittstelle zusammengefaßt werden. Bei Anschluß eines Steuerungsrechners, in dem keine sicherheitsrelevanten Stellglieder vorhanden sind, können auch sicherheitsrelevante Ausgänge zu Informationszwecken verwendet werden.

**I Not-Aus = iNA**

Die Not-Aus-Information hat die Aufgabe, eine **lokale** Notaus-Anforderung an eine Steuerung oder Signalleuchte zu melden. Dieses Signal ist eine ODER-Verknüpfung aller Not- Aus-Bedingungen mit Ausnahme des Signals: *externe* NOT-AUS *Anforderung*.

**I Fehler intern = iFi**

Das Fehlersignal gibt Auskunft, ob es innerhalb des KU-SIBA-Netzwerks zu einem Fehler gekommen ist, der zur Abschaltung geführt hat.

Im Leistungsteil 1 wird ein Ausgang 15 der Sicherheitseinrichtung 6 als Ausgang "Antriebe ein" zum Ansteuern eines Netzschützes verwendet. Es gibt ebenso die Möglichkeit, bei entsprechenden Fehlerzuständen direkt einen Not-Aus auszulösen.

Einer Sicherheitseinrichtung in der Steuereinheit 2 stehen alle Informationen und Zustände des Sicherheitskreises der Steuerungssoftware zur Verfügung. Auch hier wird ein Ausgang mit einem Not-Aus belegt sein, um einen solchen in der Steuereinheit 2 auszulösen.

Eine Sicherheitseinrichtung 6.1 in einer Bedieneinheit 3 ist hauptsächlich Träger von Signalgebern für Not-Aus, Betriebsartenwahl und Ein- und Ausschalten der Antriebe. Eine Anzeige kann über Steuerungssoftware und ein Display erfolgen.

Sicherheitseinrichtungen 6.4 und 6.5 in der Peripherie 4, 5 können Antriebsenergien für in einen Schutzkreis integrierte Servoschalter betätigen sowie Signalgeber wie Lichtvorhänge und zusätzlichen Not-Aus-Taster ausgedehnter Kinematiken in den Schutzkreis einbinden. Zum Zwecke der Anzeige kann eine identische Sicherheitseinrichtung auch in entsprechende Bedientafeln integriert werden.

In der Fig. 3 sind schematisch die Betriebszustände der erfindungsgemäßen Sicherheitseinrichtungen dargestellt.

Der Bedienerschutz kann geöffnet oder geschlossen sein. Es kann eine Zustimm-Taste betätigt (Ja) oder nicht betätigt (Nein) sein. Es kann ein Automatik- oder Testbetrieb gewählt sein. Bei Automatikbetrieb ist, wie sich aus der Aufstellung ergibt, ein Betrieb nur möglich, wenn der Bedienerschutz geschlossen ist. Bei Wahl "Test" ist ein Betrieb bei geöffnetem und geschlossenem Bedienerschutz möglich, aber nur, wenn gleichzeitig die Zustimm-Taste betätigt wird.

Die Betriebszustände können hinsichtlich weiterer Eingänge je nach Einsatz- bzw. Anwendungszweck erweitert werden.

In den Sicherheitseinrichtungen 6, 6.1 - 6.5 erfolgt zunächst ein Vergleich der lokalen Ergebnisse der beiden Mikrocontroller und eine Überprüfung auf Abweichung. Ist ein Unterschied vorhanden, wird die Variable "Vergleich fehlgeschlagen" (Vf) inkrementiert. Sie gibt die Anzahl der Kommunikationszyklen an, bei denen nacheinander die Ergebnisse beider Kanäle nicht übereingestimmt haben. Sind die Ergebnisse konsistent, wird Vf zurückgesetzt oder dekrementiert. Wird die zwischen den beiden Kanälen maximal zulässige Kanalverzögerungszeit, die definiert ist durch Vf-max, überschritten, so wird "Notaus" ausgelöst und das Netzwerk verriegelt sich.

Der Informationskanal, der für den Vergleich genutzt wird, ist der gleiche serielle Kanal, der auch für die Kommunikation zwischen den Sicherheitseinrichtungen verwendet wird.

Ein Vergleich erfolgt während der laufenden Prozesskommunikation: Ein Schritt entspricht dem Datenumfang eines Mikrocontrollers. Ein Schiebeschritt, es ist abhängig von der Position des Mikrocontrollers der Sicherheitseinrichtung der erste oder der letzte pro Kommunikation, ist für den Vergleich vorgesehen. In diesem Schritt wird das Eingangs- und das Ausgangs-Abbild mit dem des parallelen Mikrocontrollers in der gleichen Sicherheitseinrichtung verglichen.

Ein weiterer Vergleich erfolgt bei Kommunikations-Beginn oder bei einer Zwischenkommunikation. Es wird dabei geprüft, ob der Vergleich der Prozessabbilder sowie das Führen des Vf nicht auch in der nächsten Sicherheitseinrichtung stattfinden kann. So kann ein Vergleich, bei dem eine Art Zwischenkommunikation erfolgt, nur zwei Schiebeschritte dauern. Im ersten Schritt überträgt jeder Mikrocontroller eigene Prozessdaten. Der jeweils zweite Mikrocontroller einer Sicherheitseinrichtung kann jetzt bereits vergleichen. Der jeweils erste Mikrocontroller merkt sich zunächst das Prozessabbild des vorigen Mikrocontrollers. Er führt den Vergleich nach dem zweiten Schiebeschritt durch. Der VF-Zähler dieses Mikrocontrollers gilt also für den im Sicherheits-Kreis vorher angeordneten Sicherheitskern.

Im weiteren erfolgt eine Verknüpfung als eigentliche Funktion des Schierheitskreises: Zum einen wird aus den Eingängen jeder einzelnen Sicherheitseinrichtung ein eigenes Ergebnis gebildet; zum anderen werden die Ergebnisse der anderen Sicherheitseinrichtungen vor der Aktualisierung im lokalen Ergebnis berücksichtigt. Es gibt zwei Möglichkeiten, die Ausgabe-Ergebnisse zu ermitteln: Es kann bei der Kommunikation das gesamte Prozeßabbild ausgetauscht werden und somit in jeder der Gesamtnotaus parallel, aber in unterschiedlicher Reihenfolge verknüpft werden. Es kann ein Ausführungsbefehl gesendet werden. In diesem Befehl verknüpfen alle Sicherheitseinrichtungen ihre Ergebnisse, und es werden alle Ausgänge nach diesem Befehl geschaltet.

Man unterscheidet verschiedene Arten der sicheren Stillsetzung:

Die Funktion Notaus kann von verschiedenen Signalgebern ausgelöst werden. Alle angeschlossenen Signalgeber sind dabei zweikanalig angeschlossen. Beim Lösen der Notaus-Verriegelung kann eine unendliche Gleichzeitigkeit zwischen den Kanälen akzeptiert werden.

Der Notaus hat in unterschiedlichen Betriebsarten unterschiedliche Reaktionen zur Folge.

Im Automatikbetrieb ist dabei die Abschaltung des Netzes verzögert und sicher. Der eingeleitete Notaus wird von der Steuerung erkannt und es wird sofort eine Notaus-Stop-Rampe gefahren. Mit dieser Stop-Rampe bleibt der Roboter auf der programmierten Bahn. Der Roboter kommt in einem kalkulierten Punkt zum Stillstand.

Im Testbetrieb wird die Energieversorgung bei Notaus-Anforderung sofort abgeschaltet. Die Freigaben für die Antriebe bleiben, solange kein Antriebsfehler aufgetreten ist, aktiv. So wird gewährleistet, daß der Roboter mit dem kürzestmöglichen Bremsweg und damit am schnellsten in den sicheren Zustand gebracht werden kann.

Der Bedienerschutz versetzt nun die lokale Anlage in den sicheren Zustand. Der Bedienerschutz muß in den unterschiedlichen Betriebsarten mit verschiedenen Signalen verknüpft werden:

BS-Freigabe = Schutzgitter geschlossen & Automatik

+ Zustimmung gedrückt & Testbetrieb.

Der Bedienerschutz wirkt immer unverzögert auf die Energieabschaltung via Hauptschütz. Die Abschaltreaktion der Maschine oder des Roboters ist so zu gestalten, daß immer kürzeste Bremswege erreicht werden.

Die Kommunikation zwischen den Sicherheitseinrichtungen erfolgt seriell und geht durch beide Mikrocontroller hindurch, so daß jeder Mikrocontroller in der Lage ist, dem jeweils anderen über den Kommunikationsring das Prozessabbild zum Vergleich zur Verfügung zu stellen. Die Kommunikation dient zum Vergleich der Kanäle bei zweikanaligen Eingängen und zur deterministischen Aktualisierung des Ausgangsabbilds auf dem gesamten Bus. Jede Kommunikation erfolgt in Schiebeschritten. Ein Schritt entspricht dem Datenumfang eines Mikrocontrollers. Ein Schiebeschritt, es ist der erste oder der letzte pro Kommunikation, ist für den Vergleich vorgesehen. Alle anderen Schiebeschritte werden dazu benutzt, das Gesamtprozessabbild des Netzwerks in der einzelnen Sicherheitseinrichtung zu ermitteln. Dabei werden nur Prozessabbilder von anderen übernommen, welche von deren beiden Controllern gleich übertragen wurden.

**Patentansprüche**

1. Verfahren zum Überwachen einer Anlage (A) mit mehreren Funktionseinheiten (1-5), wie solchen einer Fertigungsanlage, wobei mindestens eine jeder Funktionseinheit (1-5) jeweils eigene und dieser individuell zugeordnete zweikanalige, in sich redundante Sicherheitseinrichtung (6; 6.1-6.5) jeweils ihre Funktionseinheit (1-5) und gegebenenfalls weitere dieser zugeordnete Einrichtungen laufend überprüft, wobei bei einer Fehlfunktion mindestens einer Funktionseinheit (1-5) oder Sicherheitseinrichtung (6; 6.1-6.5) mindestens ein sicherheitsrelevantes Stellglied betätigt wird, **dadurch gekennzeichnet, dass** auch die unterschiedlichen Funktionseinheiten (1-5) zugeordneten Sicherheitseinrichtungen (6; 6.1-6.5) einander laufend überwachen und über ihren Überprüfungsstand unterrichten und dass die sicherheitsrelevanten Eingänge (11-14) der beiden Kanäle jeder der Sicherheitseinrichtungen (6; 6.1-6.5) zeitlich parallel ausgewertet werden.

2. Verfahren nach Anspruch 1, **dadurch gekennzeichnet, daß** die Sicherheitseinrichtungen seriell miteinander kommunizieren.

3. Verfahren nach Anspruch 1 oder 2, **dadurch gekennzeichnet, daß** die Sicherheitseinrichtungen mittels eines Ringprotokolls miteinander kommunizieren.

4. Verfahren nach einem der vorangehenden Ansprüche, **dadurch gekennzeichnet, daß** die Sicherheitseinrichtungen laufend eine Diagnose der ihnen zugeordneten Funktionseinheiten und damit der Anlage durchführen.

5. Verfahren nach einem der Ansprüche 1 bis 4, **dadurch gekennzeichnet, daß** in den Sicherheitseinrichtungen enthaltene Mikroprozessoren zyklisch ihr Prozessorbild und das daraus kalkulierte Ergebnis und/oder den Inhalt von Speichern überprüfen.

6. Verfahren nach einem der vorangehenden Ansprüche, **dadurch gekennzeichnet, daß** der korrekte Anschluß und die Funktion von Signaleingängen und Signalgebern überprüft wird.

7. Vorrichtung zum Überwachen einer Anlage (A) mit mehreren Funktionseinheiten (1-5), wie einer Fertigungsanlage, wobei jeder Funktionseinheit (1-5) jeweils mindestens eine eigene zweikanalige, in sich redundante Einrichtung (6; 6.1-6.5) als die Funktionseinheiten (1-5) überwachende Sicherheitseinrichtungen (6; 6.1-6.5) zugeordnet ist, wobei bei einer Fehlfunktion mindestens einer Funktionseinheit (1-5) oder Sicherheitseinrichtung (6; 6.1-6.5) mindestens ein sicherheitsrelevantes Stellglied betätigbar ist, **dadurch gekennzeichnet, dass** auch die unterschiedlichen Funktionseinheiten zugeordneten Sicherheitseinrichtungen (6; 6.1-6.5) zur laufenden gegenseitigen Überwachung und Unterrichtung über ihren Überprüfungszustand miteinander verbunden sind und dass die sicherheitsrelevanten Eingänge (11-14) jeder der Kanäle der Sicherheitseinrichtungen (6; 6.1-6.5) zeitlich parallel auswertbar sind.

8. Vorrichtung nach Anspruch 7, **dadurch gekennzeichnet, daß** die Sicherheitseinrichtungen (6; 6.1-6.5) einen Controller-Kern und eine Schnittstellenbeschaltung aufweisen.

9. Vorrichtung nach Anspruch 7 oder 8, **dadurch gekennzeichnet, daß** die Sicherheitseinrichtungen (6; 6.1-6.5) seriell miteinander verbunden sind.

10. Vorrichtung nach einem der Ansprüche 7 bis 9, **dadurch gekennzeichnet, daß** die Sicherheitseinrichtungen (6; 6.1-6.5) in einem Ring miteinander verbunden sind.

11. Vorrichtung nach einem der Ansprüche 7 bis 10, **dadurch gekennzeichnet, daß** jede Sicherheitseinrichtung mindestens einen Mikroprozessor aufweist.

12. Vorrichtung nach Anspruch 11, **dadurch gekennzeichnet, daß** jede Sicherheitseinrichtung (6; 6.1-6.5) mindestens zwei Mikroprozessoren aufweist.

13. Vorrichtung nach einem der Ansprüche 7 bis 12, **dadurch gekennzeichnet, daß** jede Sicherheitseinrichtung mindestens einen sicherheitsrelevanten Ausgang (15, 16) aufweist.

14. Vorrichtung nach einem der Ansprüche 7 bis 13, **dadurch gekennzeichnet, daß** jede Sicherheitseinrichtung mehrere sicherheitsrelevante Eingänge (11-14) aufweist.

15. Vorrichtung nach einem der Ansprüche 7 bis 14, **dadurch gekennzeichnet, daß** jede Sicherheitseinrichtung (6; 6.1-6.5) Diagnoseeingänge (17) aufweist.

**16.** Vorrichtung nach Anspruch 15, **dadurch gekennzeichnet, daß** die Diagnoseeingänge (17) mit Prüf-Schaltzyklen der sicherheitsrelevanten Eingänge (11-14) synchronisiert sind.

**17.** Vorrichtung nach einem der Ansprüche 7 bis 16, **dadurch gekennzeichnet, daß** die Sicherheitseinrichtungen (6; 6.1-6.5) identisch zueinander ausgebildet sind.

**Claims**

**1.** Method for monitoring an installation (A) with several functional units (1-5), such as those of a manufacturing installation, in which at least one two-channel, in itself redundant safety device (6; 6.1-6.5) belonging to each function unit (1-5) and individually associated therewith permanently monitors its particular functional unit (1-5) and optionally further devices associated therewith, where in the case of a malfunction of at least one functional unit (1-5) or safety device (6; 6.1-6.5) at least one safety-relevant control element is operated, **characterized in that** the safety devices (6; 6.1-6.5) associated with the different functional units (1-5) also permanently monitor one another and inform one another of their monitoring state and that the safety-relevant inputs (11-14) of the two channels of each of the safety devices (6; 6.1-6.5) are evaluated in time-parallel manner.

**2.** Method according to claim 1, **characterized in that** the safety devices communicate with one another in serial manner.

**3.** Method according to claim 1 or 2, **characterized in that** the safety devices communicate with one another by means of a ring protocol.

**4.** Method according to one of the preceding claims, **characterized in that** the safety devices continuously perform a diagnosis of the functional units associated therewith and consequently the installation.

**5.** Method according to one of the claims 1 to 4, **characterized in that** microprocessors contained in the safety devices cyclically monitor their processor image and the result calculated therefrom and/or the content of memories.

**6.** Method according to one of the preceding claims, **characterized in that** the correct connection and function of signal inputs and signal generators is monitored.

**7.** Apparatus for monitoring an installation (A) with several functional units (1-5), such as a manufacturing installation, in which with each functional unit (1-5) is in each case associated at least one two-channel, in itself redundant device (6; 6.1-6.5) as safety devices (6; 6.1-6.5) monitoring the functional units (1-5), where in the case of a malfunction of at least one functional unit (1-5) or safety device (6; 6.1-6.5) at least one safety-relevant control element can be operated, **characterized in that** the safety devices (6; 6.1-6.5) associated with the different functional units are interconnected for permanent mutual monitoring and informing concerning their monitoring state and that the safety-relevant inputs (11-14) of each of the channels of the safety devices (6; 6.1-6.5) can be evaluated in time-parallel manner.

**8.** Apparatus according to claim 7, **characterized in that** the safety devices (6; 6.1-6.5) have a controller core and an interface wiring.

**9.** Apparatus according to claim 7 or 8, **characterized in that** the safety devices (6; 6.1-6.5) are interconnected in serial manner.

**10.** Apparatus according to one of the claims 7 to 9, **characterized in that** the safety devices (6; 6.1-6.5) are interconnected in a ring.

**11.** Apparatus according to one of the claims 7 to 10, **characterized in that** each safety devices has at least one microprocessor.

**12.** Apparatus according to claim 11, **characterized in that** each safety device (6; 6.1-6.5) has at least two microprocessors.

**13.** Apparatus according to one of the claims 7 to 12, **characterized in that** each safety device has at least one safety-relevant output (15, 16).

**14.** Apparatus according to one of the claims 7 to 13, **characterized in that** each safety device has several safety-relevant inputs (11-14).

**15.** Apparatus according to one of the claims 7 to 14, **characterized in that** each safety device (6; 6.1-6.5) has diagnostic inputs (17).

**16.** Apparatus according to claim 15, **characterized in that** the diagnostic inputs (17) are synchronized with test switching cycles of the safety-relevant inputs (11-14).

**17.** Apparatus according to one of the claims 7 to 16, **characterized in that** the safety devices (6; 6.1-6.5) are constructed identically to one another.

**Revendications**

1. Procédé de surveillance d'une installation (A) comprenant plusieurs unités fonctionnelles (1-5), telles que celles d'une usine, dans lequel au moins un dispositif de sécurité (6; 6.1-6.5) redondant à deux canaux propre à chacune des unités fonctionnelles (1-5) et individuellement affecté à celle-ci surveille en continu son unité fonctionnelle (1-5) et le cas échéant d'autres unités adjointes à celle-ci, et dans lequel en cas de dysfonctionnement d'au moins une unité fonctionnelle (1-5) ou dispositif de sécurité (6; 6.1-6.5) on actionne au moins un organe relatif à la sécurité, **caractérisé en ce que** les dispositifs de sécurité (6; 6.1-6.5) affectés à des unités fonctionnelles (1-5) différentes se surveillent l'un l'autre en continu et s'informent de leur état de vérification et **en ce que** les entrées (11-14) relatives à la sécurité des deux canaux de chacun des dispositifs de sécurité (6; 6.1-6.5) sont exploitées en parallèle dans le temps.

2. Procédé selon la revendication 1, **caractérisé en ce que** les dispositifs de sécurité communiquent entre eux en série.

3. Procédé selon la revendication 1 ou 2, **caractérisé en ce que** les dispositifs de sécurité communiquent entre eux au moyen d'un protocole en anneau.

4. Procédé selon l'une quelconque des revendications précédentes, **caractérisé en ce que** les dispositifs de sécurité effectuent en continu un diagnostic des unités de sécurité qui leur sont affectées et ainsi de l'installation.

5. Procédé selon l'une quelconque des revendications 1 à 4, **caractérisé en ce que** les microprocesseurs des dispositifs de sécurité vérifient de manière cyclique leur image processeur et le résultat fourni par les calculs à partir de celle-ci et/ou le contenu de mémoires.

6. Procédé selon l'une quelconque des revendications précédentes, **caractérisé en ce que** l'on vérifie que le branchement est correct et le fonctionnement d'entrées de signaux et de postes transmetteurs de signaux.

7. Dispositif de surveillance d'une installation (A) comprenant plusieurs unités fonctionnelles (1-5) telles que celles d'une usine, dans lequel à chaque unité fonctionnelle (1(5) est à chaque fois affecté au moins un dispositif (6; 6.1-6.5) propre redondant à deux canaux, sous la forme de dispositifs de sécurité (6; 6.1-6.5) surveillant les unités fonctionnelles (1-5), dans lequel on peut actionner en cas de dysfonctionnement d'au moins une unité fonctionnelle (1-5) ou dispositif de sécurité (6; 6.1-6.5) au moins un organe relatif à la sécurité, **caractérisé en ce que** les dispositifs de sécurité (6; 6.1-6.5) affectés à différentes unités fonctionnelles sont également reliés entre eux pour leur surveillance continue mutuelle et l'information concernant leur état de surveillance, et **en ce que** les entrées (11-14) relatives à la sécurité de chacun des canaux des dispositifs de sécurité (6; 6.1-6.5) peuvent être exploitées en parallèle dans le temps.

8. Dispositif selon la revendication 7, **caractérisé en ce que** les dispositifs de sécurité (6; 6.1-6.5) présentent un coeur de contrôleur et une connexion d'interfaces.

9. Dispositif selon la revendication 7 ou 8, **caractérisé en ce que** les dispositifs de sécurité (6; 6.1-6.5) sont reliés entre eux en série.

10. Dispositif selon l'une quelconque des revendications 7 à 9, **caractérisé en ce que** les dispositifs de sécurité (6; 6.1-6.5) sont reliés entre eux en anneau.

11. Dispositif selon l'une quelconque des revendications 7 à 10, **caractérisé en ce que** chaque dispositif de sécurité présente au moins un microprocesseur.

12. Dispositif selon la revendication 11, **caractérisé en ce que** chaque dispositif de sécurité (6; 6.1-6.5) présente au moins deux microprocesseurs.

13. Dispositif selon l'une quelconque des revendications 7 à 12, **caractérisé en ce que** chaque dispositif de sécurité présente au moins une sortie (15,16) relative à la sécurité.

14. Dispositif selon l'une quelconque des revendications 7 à 13, **caractérisé en ce que** chaque dispositif de sécurité présente plusieurs entrées (11-4) relatives à la sécurité.

15. Dispositif selon l'une quelconque des revendications 7 à 14, **caractérisé en ce que** chaque dispositif de sécurité (6; 6.1-6.5) présente des entrées de diagnostic (17).

16. Dispositif selon la revendication 15, **caractérisé en ce que** les entrées de diagnostic (17) sont synchronisées avec des fréquences de contrôle des entrées (11-14) relatives à la sécurité.

17. Dispositif selon l'une quelconque des revendications 7 à 16, **caractérisé en ce que** les dispositifs de sécurité (6; 6.1-6.5) sont conformés identiques l'un à l'autre.

Fig. 1

| Bedienerschutz | geöffnet | | geschlossen | |
|---|---|---|---|---|
| Zustimmung | nein | ja | nein | ja |
| Test (ja) | AUS | EIN | AUS | EIN |
| Automatik (ja) | AUS | AUS | EIN | EIN |

Fig. 3

Fig. 2